# EUROPÄISCHE PATENTSCHRIFT

(11) **EP 1 291 635 B1**
(45) Veröffentlichungstag und Bekanntmachung des Hinweises auf die Patenterteilung: **24.09.2008**
(21) Anmeldenummer: 02014096.8
(22) Anmeldetag: 02.07.2002
(51) Int. Cl.: G01M 17/04

(54) **Verfahren und Vorrichtung zum Prüfen von Fahrzeugschwingungsdämpfern**
Procedure and device for testing vehicle shock absorbers
Procédé et dispositif d'essai d'amortisseurs de véhicule

(30) Priorität: 05.09.2001 DE 10143492
(43) Veröffentlichungstag der Anmeldung: 12.03.2003
(73) Patentinhaber: MAHA Maschinenbau Haldenwang GmbH & Co. KG, 87490 Haldenwang (DE)
(72) Erfinder: Knestel, Anton, 87496 Hopferbach (DE)
(74) Vertreter: Beetz & Partner

(56) Entgegenhaltungen:
- DE-A- 2 225 164
- DE-A- 10 017 558
- DE-C- 3 320 570
- FR-A- 2 292 226
- US-A- 3 690 145
- US-A- 3 855 841
- US-A- 3 937 058

## Beschreibung

Die Erfindung betrifft ein Verfahren und eine Vorrichtung zum Prüfen von Fahrzeugschwingungsdämpfern in eingebautem Zustand, wobei zumindest ein Fahrzeugrad auf einer Aufstandsplatte aufsteht und von dieser zu Schwingungen angeregt wird.

Zum Prüfen der Wirkungen von in Kraftfahrzeugen eingebauten Schwingungsdämpfern werden bekanntermaßen die Räder des Fahrzeugs auf Schwing- oder Aufstandsplatten eines Prüfstandes gestellt. Die Schwingplatten werden mit Frequenzen von oberhalb der Resonanzfrequenz des Aufhängungssystems der Fahrzeugachse erregt. Meist wird dazu ein Schwungrad von einem Elektromotor auf eine entsprechende Umdrehungsgeschwindigkeit beschleunigt. Ein Kurbeltrieb, der mit dem Schwungrad verbunden ist, erregt die Aufstandsplatte nach dem Abschalten des Antriebs zu einer vertikalen Schwingbewegung mit abfallenden Frequenzen. Da die Resonanzfrequenz der schwingungsgedämpften Fahrzeugachse gewöhnlich in einem Frequenzbereich liegt, der kleiner als 15 Hz ist, wird das Schwungrad von dem Antrieb auf 960 U/min beschleunigt. Die Erregung der Schwingplatte über den Kurbeltrieb durchläuft anschließend den Resonanzbereich der Fahrzeugaufhängung. Die während der Resonanzfrequenz auftretende Amplitude der vertikalen Bewegung des Fahrzeugrads ist ein Maß für die Dämpfung der Radaufhängung und erlaubt eine Beurteilung der Funktionsfähigkeit der Schwingungsdämpfer.

Zur Entkopplung der Bewegung wird der Erregerhub des Kurbeltriebes nicht starr auf die Aufstandsplatte eingeleitet, sondern wird über eine sogenannte Fußpunktfeder auf die Aufstandsplatte übertragen. Im Resonanzfall ermöglicht dies eine von der Bewegung des Antriebs entkoppelte Schwingung der Aufstandsplatte mit dem Fahrzeugrad. Um zu gewährleisten, daß zwischen den Bewegungen der Aufstandsplatte und des Rades keine Phasendifferenzen auftreten, muß das Feder-Masse-System der Fußpunktfeder und der Aufstandsplatte entsprechend dem Feder-Masse-System des Rades und der Radaufhängung abgestimmt sein, so daß im Resonanzfall nur minimale Kräfte zwischen Reifen und Aufstandsplatte übertragen werden. Um den Einfluß der Reifensteifigkeit, des Reifendrucks und des Reifentyps zu verringern, ist es notwendig, daß die Fußfeder eine geringere Federhärte aufweist als die Reifenfeder. Durch die deshalb relativ weiche Fußpunktfeder können jedoch große Amplituden in der Bewegung der Aufstandsplatte, insbesondere im Resonanzfall, entstehen. Die großen Amplituden erschweren die Messung der Amplitudenhöhe bei Resonanz des Schwingungssystems und können die Sicherheit des Prüfstands beeinträchtigen. Weiterhin führen weiche Fußpunktfedern zu Problemen beim Auffahren des Fahrzeugs auf die Prüfvorrichtung, da sich die Aufstandsplatten bedingt durch das Fahrzeuggewicht stark absenken können. Sollen auf einem Prüfstand Fahrzeuge mit stark unterschiedlichem Gewicht, beispielsweise PKWs und Klein-LKWs, geprüft werden, erhöht sich der Konstruktionsaufwand beträchtlich.

Durch Verwendung von Fußpunktfedern mit veränderlichen Federhärten kann ein Prüfstand dem Gewicht des jeweiligen Fahrzeugs angepaßt und zu große Bewegungen der Aufstandsplatten können verhindert werden. Dies führt jedoch zu einem großen konstruktiven Aufwand, beispielsweise bei der Verstellung der Federhärte durch angetriebene Spindeln, und erhöht die bewegte Masse des schwingenden Systems. Da für eine ausreichende Genauigkeit des Meßergebnisses bei dem Resonanzverfahren das Schwingsystem des Prüfstandes keine Eigendämpfung durch Reibung aufweisen soll, führen auch pneumatische Federn und Luftbalgfedern als Fußpunktfedern zu negativen Auswirkungen auf die Meßgenauigkeit.

Ein weiterer Nachteil von bekannten Prüfvorrichtungen ist, daß bei hohen Achslasten die mechanische Konstruktion, insbesondere die Parallelschwingen zur Lagerung der Aufstandsplatten, hohen mechanischen Belastungen ausgesetzt ist. Da sich die gesamte Achslast des Fahrzeugs auf dem Kurbeltrieb abstützt, muß auch der Antriebsmotor entsprechend kräftig ausgelegt werden.

Es ist bei Stoßdämpferprüfständen normalerweise üblich, die Räder einer Achse sequentiell zu prüfen, da eine gegenseitige Beeinflussung der Schwingungsdämpfer auf beiden Fahrzeugseiten möglich ist. Für eine gemeinsame Prüfung der Schwingungsdämpfer einer Achse müssen deshalb die Erregungen der Aufstandsplatten phasensynchron erfolgen, um einen Einfluß bzw. ein Übersprechen eines defekten Dämpfers auf die jeweils andere Seite zu verhindern. Eine phasensynchrone Erregung der Aufstandsplatten kann beispielsweise durch einen gemeinsamen Antrieb und eine Wellenverbindung zwischen den Kurbeltrieben erfolgen, was jedoch zu einem erhöhten konstruktiven Aufwand führt und eine Einzelmessung von Schwingungsdämpfern ausschließt.

Der für die Amplitudenmessung der Plattenbewegung notwendige Wegeaufnehmer ist, insbesondere durch die relativ großen zu erfassenden Amplituden, eine störanfällige und aufwendige Komponente eines Prüfstandes.

Die US-A-3 937 058 zeigt eine Vorrichtung, die hydraulisch betätigte Zylinder aufweist, welche mit Radaufstandsplatten in Verbindung stehen. Zwischen den Radaufstandsplatten und den hydraulisch betätigten Zylindern befindet sich ein Kraftaufnehmer, der ein Diaphragma enthält, wobei an diesem Diaphragma ein Dehnmessstreifen angeordnet ist. Über diesen Dehnmessstreifen kann die entsprechende Aufstandskraft erfasst werden um eine Beurteilung von Stoßdämpfern zu ermöglichen. Die Betätigung der Zylinder erfolgt über Reversierventile, wobei jedes dieser Reversierventile mit beiden Zylindern verbunden ist. Dadurch sind die Zylinder immer gleich getaktet.

Die US-A-3 855 841 zeigt eine Vorrichtung und ein Verfahren zum Testen von Schwingungsdämpfern von Fahrzeugen. Hierbei ist eine hydraulische und eine über einen Synchronmotor erfolgende Erregung von Aufstandsplatten gezeigt. Die Betätigung der Hydraulikzylinder oder die Betätigung der Synchronmotoren ist hierbei gleich eingestellt beziehungsweise gesteuert. Zwischen einem großen Bügel, der mit einer Radaufstandsplatte verbunden ist und einem kleinem Bügel, der mit dem Exzenterkurbeltrieb verbunden ist, ist ein flexibler Block vorgesehen, der sich verformt, wenn Fahrzeuge auf die Rampen auffahren, deren Gewicht das Maximalgewicht überschreitet, wodurch dann Stützfüße auf einer Bodenplatte aufstehen und dadurch eine zerstörende Wirkung auf die entsprechenden Lager vermieden wird.

Die Aufgabe der vorliegenden Erfindung ist es, ein Verfahren und eine Vorrichtung zum Prüfen der Schwingungsdämpfer von Fahrzeugen zu schaffen, die eine vereinfachte Prüfung der Schwingungsdämpfer von Fahrzeugen mit unterschiedlichem Fahrzeuggewicht und mit hoher Genauigkeit ermöglichen, wobei der Konstruktionsaufwand und die mechanische Belastung der bewegten Teile des Prüfstandes verringert werden soll. Weiterhin sollen das Verfahren und die Vorrichtung eine reproduzierbare und genaue Geräuschprüfung an Fahrzeugen, insbesondere eine Lokalisierung von Geräuschquellen, ermöglichen.

Diese Aufgabe wird erfindungsgemäß durch die unabhängigen Ansprüche gelöst. Die abhängigen Ansprüche betreffen vorteilhafte Ausführungsformen der Erfindung.

Eine erfindungsgemäße Prüfvorrichtung für Schwingungsdämpfer von Fahrzeugen in eingebautem Zustand weist eine Aufstands- bzw. Schwingplatte für ein Fahrzeugrad auf. Die Aufstandsplatte ist über ein erstes elastisches Element mit einem Antrieb verbunden. Das elastische Element kann eine Entkopplung der Bewegung von Aufstandsplatte und Antrieb ermöglichen. Die durch die Erregung von dem Antrieb schwingende Aufstandsplatte kann somit eine Phasendifferenz und eventuell eine unterschiedliche Frequenz zu der Erregungsbewegung des Antriebs aufweisen.

Der Antrieb kann zweckmäßigerweise einen Elektromotor und einen Kurbeltrieb oder Exzenter aufweisen. Aufgrund der einfachen und genauen Ansteuerbarkeit sind Drehstrommotoren, insbesondere Asynchron-Drehstrommotoren, besonders geeignet.

Die Radaufstandsplatte wird von dem Antrieb über das erste elastische Element in Schwingbewegungen versetzt . Die Schwingbewegungen der Radaufstandsplatte erfolgen zweckmäßigerweise in vertikaler Richtung. Durch die Schwingbewegungen kann eine Fahrzeugachse mit Fahrzeugrad und Schwingungsdämpfer zu vertikalen Bewegungen angeregt werden. Die Anregung der schwingungsgedämpften Fahrzeugachse erfolgt vorteilhafterweise in einem Bereich der Resonanzfrequenz der Fahrzeugachse. Bei einer Anregung mit der Resonanzfreqeunz, die meist in einem Frequenzbereich von 0 bis 15 Hz liegt, können Resonanzschwingungen der Fahrzeugachse auftreten. Durch eine Abstimmung der Feder-Masse-Systeme der Prüfvorrichtung und der Fahrzeugachse kann das Auftreten von Phasendifferenzen zwischen den Bewegungen der Aufstandsplatte und des Fahrzeugrads verhindert werden.

Erfindungsgemäß wird eine Bewegung der Aufstandsplatte von einer Meßvorrichtung erfaßt. Die Meßvorrichtung erfaßt zweckmäßigerweise die Amplitude und/oder Frequenz einer vertikalen Bewegung der Aufstandsplatte und kann beispielsweise als inkrementaler oder absoluter Wegaufnehmer ausgebildet sein. Andere Möglichkeiten zur Erfassung der Bewegung der Aufstandsplatte, wie beispielsweise eine Winkel- oder Kraftmessung, können erfindungsgemäß auch vorgesehen sein. Da die während der Resonanzfrequenz auftretende Amplitude ein Maß für die Dämpfung des zu prüfenden Schwingungsdämpfers im Fahrzeug ist, eignet sich die Amplitudenhöhe im Resonanzfall des Schwingungssystems besonders gut zur Auswertung und Beurteilung der Schwingungsdämpfer des zu prüfenden Fahrzeugs.

Erfindungsgemäß ist die Radaufstandsplatte mit einem zweiten elastischen Element verbindbar und/oder fest verbunden, das sich gegen einen Rahmen der Prüfvorrichtung abstützt. Durch das zweite elastische Element, das zwischen der Radaufstandsplatte und dem Rahmen angeordnet ist, kann ein Teil der auf die Aufstandsplatte wirkenden Achslast auf den Rahmen des Prüfstands abgeleitet werden. Ein übermäßiges Absinken der Aufstandsplatte beim Auffahren eines Kraftfahrzeugs wird vermieden. Weiterhin können die Bewegungsamplituden der Aufstandsplatte durch das zweite elastische Element verringert werden. Durch eine entsprechende Dimensionierung des zweiten elastischen Elements kann das schwingende System der Prüfvorrichtung dem jeweiligen Gewicht des zu prüfenden Fahrzeugs angepaßt werden, ohne daß durch Reibung eine Eigendämpfung des Schwingsystems des Prüfstands 'auftritt und die Meßgenauigkeit verringert wird. Es ist weiterhin erfindungsgemäß möglich ein zweites elastisches Element mit variabler Federhärte oder eine Vielzahl von elastischen Elementen mit unterschiedlicher Federhärte vorzusehen, die nach Bedarf zugeschaltet werden können, um eine Anpassung der Federsteifigkeit an das Fahrzeuggewicht zu erzielen. Da sich das zweite elastische Element an dem Rahmen der Prüfvorrichtung abstützt, können Vorrichtungen zur Veränderung der Federhärte und zum An- und Abschalten von Federelementen derart angeordnet werden, daß sie nicht bewegt werden und keine Auswirkung auf die bewegten Massen des Schwingsystems ausüben.

Durch die Abstützung der Radaufstandsplatte mit dem zweiten elastischen Element benötigt der Antrieb zur Anregung der Aufstandsplatte eine kleinere Antriebsleistung des Motors. Weiterhin kann die Konstruktion der Halterung und Führung der Aufstandsplatte vereinfacht und die Dimensionierung des ersten elastischen Elements verkleinert werden.

Vorteilhafterweise können das erste und/oder zweite elastische Element als Schrauben- oder Blattfedern ausgebildet sein. Derartige Federelemente zeichnen sich dadurch aus, daß sie keine Eigendämpfung aufweisen und eine hohe Meßgenauigkeit der Prüfvorrichtung ermöglichen. Selbstverständlich können jedoch auch andere elastische Elemente, beispielsweise pneumatische oder hydraulische Systeme, vorgesehen sein.

Vorteilhafterweise ist das erste und/oder zweite elastische Element als Luftbalgfeder ausgebildet. Da die Federsteifigkeit einer Luftbalgfeder durch Veränderung des Luftdrucks in dem Luftbalg variiert werden kann, ist eine besonders einfache Anpassung der Federsteifigkeit des elastischen Elements an das Fahrzeuggewicht möglich.

Zweckmäßigerweise wird die Radaufstandsplatte von einer Parallelschwinge gehalten. Die Radaufstandsplatte kann über diese und das erste elastische Element mit dem Antrieb verbunden sein. Eine derartige Anordnung ermöglicht eine einfache und belastungsfähige Führung der Aufstandsplatte für die vertikale Bewegung. Durch das zweite elastische Element wird die Belastung der Parallelschwinge verringert und eine vereinfachte Konstruktion der Schwinge ermöglicht. Erfindungsgemäß wird dieser Vorteil jedoch auch bei andersartigen Führungen der Aufstandsplatte erzielt.

Gemäß einer vorteilhaften Ausgestaltung der Erfindung ist das zweite elastische Element mit der Radaufstandsplatte koppelbar. In Abhängigkeit vom Fahrzeuggewicht kann das zweite elastische Element an die Radaufstandsplatte angekoppelt werden, um diese gegen den Rahmen des Prüfstands abzustützen. Bei leichten Fahrzeugen mit einem geringen Fahrzeuggewicht kann auf eine derartige Unterstützung der Radaufstandsplatte verzichtet werden, da kein starkes Absinken der Aufstandsplatte durch das Fahrzeuggewicht erfolgt. Ohne die Ankopplung des zweiten elastischen Elements kann die erfindungsgemäße Prüfvorrichtung für leichte Fahrzeuge wie eine bekannte Prüfvorrichtung betrieben werden, wobei bereits vorhandene Meß- und Vergleichswerte weiterverwendet werden können. Die Dimensionierung des ersten elastischen Elements (Fußpunktfeder) kann für das Fahrzeuggewicht dieser Fahrzeuge erfolgen.

Für schwerere Fahrzeuge mit einem hohen Fahrzeuggewicht, wie z.B. ein kleinerer LKW, kann durch das angekoppelte zweite elastische Element ein übermäßiges Absinken der Aufstandsplatte durch das Fahrzeuggewicht verhindert werden. Der Prüfstand kann somit auch zur Prüfung von schwereren Fahrzeugen eingesetzt werden. Aufgrund der härteren Reifenfedern für derartige Fahrzeuge und das höhere Gewicht der Fahrzeuge werden das Schwingungsverhalten des Systems und die Meßgenauigkeit nicht wesentlich beeinflußt. Die Kopplung zwischen dem zweiten elastischen Element und der Radaufstandsplatte kann beispielsweise durch eine Verriegelung zwischen diesen erfolgen.

Vorteilhafterweise wird das zweite elastische Element durch eine Erhöhung des Luftdrucks in dem Luftbalg an die Radaufstandsplatte angekoppelt. Durch die Erhöhung des Luftdrucks (Aufpumpen) des als Luftbalgfeder ausgebildeten zweiten elastischen Elements wird dessen Volumen und insbesondere dessen Höhe vergrößert, so daß es von unten an der Aufstandsplatte anstehen kann. Über die anstehende Luftbalgfeder kann die Radaufstandsplatte gegen den Rahmen abgestützt werden. Die Federsteifigkeit der Luftbalgfeder kann durch eine Veränderung des Luftdrucks in dem Luftbalg und/oder das Befüllen weiterer Luftkammern angepaßt werden. Durch eine Kupplung kann eine Verbindung zwischen Aufstandsplatte und Luftbalgfeder bewirkt werden. Die Kupplung kann beispielsweise durch einen mechanischen Verschluß oder magnetisch erfolgen.

Zweckmäßigerweise wird das zweite elastische Element durch ein Absaugen von Luft aus der Luftbalgfeder und/oder durch Federelemente von der Radaufstandsplatte abgekoppelt. Durch das Absaugen oder das Entweichen von Luft aus der Luftbalgfeder wird deren Höhe verringert und diese von der Radaufstandsplatte abgekoppelt, so daß die Aufstandsplatte für leichtere Fahrzeuge ohne Abstützung durch das zweite elastische Element schwingen kann. Das Entweichen von Luft aus der Luftbalgfeder kann durch Federelemente beschleunigt werden, die derart angeordnet sind, daß sie den Luftbalg zusammenziehen. Selbstverständlich ist die Federkraft dieser Federelemente bei der Ermittlung der Federsteifigkeit der Luftbalgfeder zu berücksichtigen.

Um jegliche zusätzliche Reibung zu verhindern, kann der Luftbalg am Rahmen befestigt werden und durch Federn bzw. Vakuumieren in seine minimale Ausfahrlänge gebracht werden, in der er von der Aufstandsplatte abgekoppelt ist. Für leichtere Fahrzeuge kann sich so die Aufstandsplatte frei bewegen. Wird nun eine Unterstützung der Aufstandsplatte durch die Luftbalgfeder für ein schwereres Fahrzeug benötigt, kann der Luftbalg bis zur Aufstandsplatte ausgefahren und durch zusätzliche Druckerhöhung an die Aufstandsplatte angedrückt werden.

Zweckmäßigerweise erfaßt die Meßvorrichtung eine Kraft auf das zweite elastische Element und ermittelt die Bewegung der Radaufstandsplatte unter Berücksichtigung der erfaßten Kraft. Da die Erfassung einer Kraft, z.B. durch Dehnungsmeßstreifen, besonders einfach erfolgen kann, erlaubt es eine derartige Ausgestaltung der Erfindung auf einen aufwendigen und anfälligen Wegaufnehmer zur Ermittlung der Bewegung der Radaufstandsplatte zu verzichten. Eine besonders vorteilhafte Ausgestaltung sieht vor, durch Messung des Luftdrucks eines als Luftbalgfeder ausgebildeten zweiten elastischen Elements die Kraft auf dieses zweite elastische Element zu erfassen und die Bewegung der Radaufstandsplatte zu ermitteln. Anhand der Luftdruckschwankungen in dem Luftbalg können die Amplituden der Bewegungen der Radaufstandsplatte besonders einfach ermittelt werden.

Die Prüfvorrichtung für Schwingungsdämpfer von Fahrzeugen in eingebautem Zustand weist mehrere Aufstandsplatten auf. Die Aufstandsplatten sind jeweils einem Fahrzeugrad zugeordnet und über ein erstes elastisches Element mit jeweils einem Antrieb verbunden. Jede Aufstandsplatte weist einen eigenen ansteuerbaren Antrieb auf, der die jeweilige Aufstandsplatte in Bewegung versetzt, insbesondere eine vertikale Schwingbewegung. Die Bewegungen der Aufstandsplatten, insbesondere Amplitude und/oder Frequenz, werden von einer Meßvorrichtung erfaßt. Anhand der erfaßten Bewegungen, insbesondere den Amplituden der Aufstandsplatten im Resonanzfall, können die Funktionsfähigkeit und Wirkung der Schwingungsdämpfer geprüft und beurteilt werden.

Jeder der Antriebe wird durch eine Antriebssteuerung einzeln angesteuert. Erfindungsgemäß erfolgt die Ansteuerung der Antriebe phasensynchron, um eine synchrone Erregung der Aufstandsplatten und der Fahrzeugräder zu erzielen. Durch die phasensynchrone Erregung werden Schwingungen zwischen den beiden Fahrzeugseiten und ein Übersprechen eines defekten Dämpfers auf die jeweils andere Seite verhindert. Dies ermöglicht die gemeinsame Prüfung der Räder einer Achse ohne eine gegenseitige Beeinflussung der beiden Fahrzeugseiten und verringert somit die Prüfzeiten für Fahrzeuge. Zweckmäßigerweise werden diejenigen Antriebe phasensynchron angesteuert, die den Rädern einer Achse des Fahrzeugs, beispielsweise die Vorder- oder Hinterachse des Fahrzeugs, zugeordnet sind. Die Antriebsteuerung kann auch eine Regelvorrichtung umfassen, mit der die Steuergröße, insbesondere Drehzahl und/oder Phasenlage des Antriebs eingestellt werden kann.

In einer besonders vorteilhaften Ausgestaltung der Erfindung sind die Antriebe als Drehstrommotoren, insbesondere als Asynchron-Drehstrommotoren, ausgebildet. Im Zusammenhang mit einer geeigneten Antriebssteuerung für Drehstrommotoren können diese besonders einfach und genau mit gleicher Frequenz und synchronisierten Drehwinkeln betrieben werden, ohne daß eine aufwendige mechanische Kopplung zwischen den Erregern der Aufstandsplatten notwendig ist.

Vorteilhafterweise kann ein zweites elastisches Element zwischen der Aufstandsplatte und einem Rahmen der Prüfvorrichtung ankoppelbar vorgesehen sein. Durch das zweite elastische Element kann die Aufstandsplatte für schwerere Fahrzeuge abgestützt werden, so daß ein übermäßiges Absinken der Aufstandsplatte bei großer Belastung verhindert wird. Weiterhin kann durch das Vorsehen eines zweiten elastischen Elements die Konstruktion der Parallelschwinge vereinfacht und die Antriebsleistung des Antriebsmotors verringert werden.

Eine besonders günstige Möglichkeit zur Erfassung der Bewegung der Aufstandsplatte ergibt sich, wenn die Meßvorrichtung als Kraftmeßvorrichtung ausgebildet ist, die eine Kraft auf das zweite elastische Element erfaßt. Beispielsweise können Dehnungsmeßstreifen oder Kraftmeßdosen zur Erfassung der Kraft vorgesehen sein.

Gemäß eines weiteren Aspekts der Erfindung weist eine Prüfvorrichtung für Schwingungsdämpfer eine Aufstandsplatte für ein Fahrzeugrad auf. Die Aufstandsplatte ist über ein erstes elastisches Element mit einem Antrieb verbunden und kann von diesem in Schwingbewegungen versetzt werden. Die bewegte Radaufstandsplatte kann eine Fahrzeugachse mit Fahrzeugrad und Schwingungsdämpfer zu Resonanzschwingungen anregen. Eine Meßvorrichtung ermittelt eine Bewegung der Aufstandsplatte, insbesondere die Amplituden im Resonanzfall als Grundlage für die Beurteilung der zu prüfenden Schwingungsdämpfer. Die Meßvorrichtung ist erfindungsgemäß als Kraftmeßvorrichtung ausgebildet, die eine Kraft auf das elastische Element erfaßt. Die Bewegung der Aufstandsplatte wird unter Berücksichtigung der erfaßten Kraft und der Phasenlage des Antriebs ermittelt. Die Kraftmeßvorrichtung kann beispielsweise als Kraftmeßdose oder Dehnungsmeßstreifen ausgebildet sein.

Aus der erfaßten Kraft kann über die Federkonstante des elastischen Elements das Wegsignal des elastischen Elements und dessen Länge ermittelt werden. Das Wegsignal der Aufstandsplatte und dessen Position kann unter Berücksichtigung der Phasenlage des Antriebs bzw. der Lage des Erregers ermittelt werden. Die Korrektur des Wegsignals des elastischen Elements um die Phasenlage des Antriebs ist notwendig, da Aufstandsplatte und Erregerhubmotor keine synchrone Bewegung ausführen. Die Lage des Erregerhubmotors kann beispielsweise durch einen Winkel- oder Wegaufnehmer erfolgen. Eine besonders einfache Ermittlung der Phasenlage kann bei der Verwendung von Drehstrommotoren durch die Antriebssteuerung erfolgen.

Gemäß einer vorteilhaften Gestaltung der Prüfvorrichtung ist das erste elastische Element als Luftbalgfeder ausgebildet, wobei die Meßvorrichtung den Luftdruck der Luftbalgfeder erfaßt. Aus dem Luftdruck in dem Luftbalg kann durch einfache Umrechnung die Kraft auf die Luftbalgfeder und unter Berücksichtigung der Phasenlage des Antriebs die Position der Aufstandsplatte ermittelt werden. Aus dem zeitlichen Verlauf der Position der Aufstandsplatte kann direkt die Amplitude der Bewegung der Aufstandsplatte bestimmt werden.

Ein Verfahren zur Prüfung von Schwingungsdämpfern von Fahrzeugen im eingebauten Zustand umfaßt das Antreiben einer Aufstandsplatte für ein Fahrzeugrad über ein erstes elastisches Element und die Erfassung einer Bewegung der Aufstandsplatte, wobei die Radaufstandsplatte über ein zweites elastisches Element gegen einen Rahmen abgestützt wird.

Ein weiteres Verfahren zur Prüfung von Schwingungsdämpfern umfaßt das Antreiben von mehreren jeweils einem Fahrzeugrad zugeordneten Aufstandsplatten über jeweils ein erstes elastisches Element von jeweils einem Antrieb und die Erfassung einer Bewegung der Aufstandsplatte, wobei der Antrieb der Aufstandsplatten phasensynchron erfolgt.

Ein weiteres Verfahren zur Prüfung von Schwingungsdämfpern umfaßt das Antreiben einer Aufstandsplatte für ein Fahrzeugrad über ein erstes elastisches Element und die Erfassung einer Bewegung der Aufstandsplatte, wobei die Erfassung der Bewegung durch ein Messen einer Kraft auf das elastische Element und unter Berücksichtigung der Phasenlage des Antriebs erfolgt.

Die erfindungsgemäße Vorrichtung und das erfindungsgemäße Verfahren ermöglichen eine einfache und genaue Prüfung von Schwingungsdämpfern für Fahrzeuge mit unterschiedlichem Gewicht, wobei durch das Vorsehen eines zweiten elastischen Elements, das bei Bedarf an die Radaufstandsplatte ankoppelbar ist, die Führung der Radaufstandsplatte und der Antriebsmotor von dem Fahrzeuggewicht teilweise entlastet werden. Durch die phasensynchrone Ansteuerung der Antriebe können mehrere Schwingungsdämpfer gleichzeitig geprüft werden. Ein erfindungsgemäßer Prüfstand kann weiterhin die Bewegung der Aufstandsplatte unter Berücksichtigung einer einfach zu erfassenden Kraft, und insbesondere durch Messung des Luftdrucks in dem als Luftfeder ausgebildeten elastischen Element, und der Phasenlage des Antriebs ohne weitere Weg- oder Winkelaufnehmer ermitteln. Werden weiterhin die Antriebe einzeln durch eine Antriebssteuerung angesteuert, kann der erfindungsgemäße Prüfstand auch zur Prüfung von Karosseriegeräuschen eingesetzt werden. Durch das Konzept der vorliegenden Erfindung ist es möglich, einen einzigen Prüfstand zu mehreren Prüfzwecken und für unterschiedliche Fahrzeugtypen (PKW, LKW) vorzusehen. Eine elektronische Ansteuerung der als Asynchron-Drehstrommotoren ausgebildeten Antriebe ermöglicht den vielseitigen Einsatz der Prüfvorrichtung, wobei keine aufwendige mechanische Synchronisation der Erregung der Aufstandsplatten notwendig ist.

Weitere Besonderheiten und Vorzüge der Erfindung lassen sich den Zeichnungen und der folgenden Beschreibung bevorzugter Ausführungsbeispiele entnehmen. Es zeigen:
Fig. 1 ein schematisches Funktionsschaltbild zur Erläuterung der Erfindung;
Fig. 2a eine schematische Darstellung einer unbelasteten Prüfvorrichtung;
Fig. 2b eine schematische Darstellung einer belasteten Prüfvorrichtung; und
Fig. 3 eine weitere schematische Darstellung einer Prüfvorrichtung für Kraftfahrzeuge.

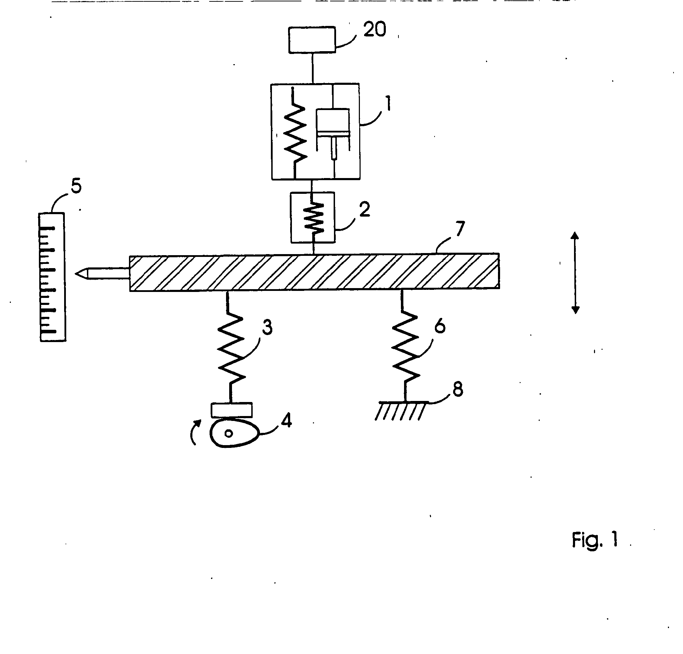

Die Fig. 1 zeigt ein schematisches Funktionsschaltbild zur Erläuterung des Funktionsprinzips der Erfindung. Auf einer Aufstandsplatte 7 der Prüfvorrichtung steht ein Fahrzeugrad 2 des zu prüfenden Fahrzeugs auf. Das Fahrzeugrad 2 wird aufgrund der elastischen Eigenschaften des Reifens als Reifenfeder dargestellt. Die Reifensteifigkeit der Reifenfeder wird vom Reifentyp (Ballon- oder Niederquerschnittsreifen) und dem Reifendruck beeinflußt. Bei leichteren Fahrzeugen ist die Reifenfeder konstruktionsbedingt weicher als bei schwereren Fahrzeugen, deren Reifenfeder eine größere Reifensteifigkeit aufweist. Der Schwingungsdämpfer 1 des Fahrzeugs wird in Fig. 1 als ein gedämpftes Federsystem dargestellt. Die auf die Achse wirkende Fahrzeugmasse wird durch den Kasten 20 symbolisiert.

Zur Prüfung des Schwingungsdämpfers 1 wird dieser von der Aufstandsplatte 7 über das Fahrzeugrad 2 zu Schwingungen mit verschiedenen Frequenzen angeregt. Die Amplituden der Bewegungen der Aufstandsplatte 7 werden über eine Meßvorrichtung 5 erfaßt.

Die Bewegungen der Aufstandsplatte 7 entsprechen den Bewegungen des Schwingungsdämpfers 1, wenn der Einfluß der Reifenfeder 2 vernachlässigt werden kann. Durch eine entsprechende Abstimmung des Feder-Masse-Systems der Prüfvorrichtung mit dem Feder-Masse-System des Fahrzeugs kann gewährleistet werden, daß keine Phasendifferenzen zwischen Aufstandsplatte 7 und Rad 2 bzw. Schwingungsdämpfer 1 auftreten.

Die Aufstandsplatte 7 ist über ein erstes elastisches Element 3 mit einem Antrieb 4 verbunden. Der Antrieb 4 kann beispielsweise einen Elektromotor, insbesondere einen Asynchron-Drehstrommotor, aufweisen, der über einen Exzenter- oder Kurbeltrieb mit dem ersten elastischen Element 3 verbunden ist. Durch die Drehbewegung des Exzenters wird die Aufstandsplatte 7 zu vertikalen Schwingbewegungen angeregt. Aufgrund der elastischen Kopplung zwischen Aufstandsplatte 7 und Antrieb 4 können Phasendifferenzen zwischen diesen auftreten, zumal es zur Abstimmung der Feder-Masse-Systeme notwendig ist, daß das erste elastische Element 3 eine deutlich geringere Federhärte aufweist als die Reifenfeder 2. Zum Erzielen eines genauen Meßergebnisses ist es vorteilhaft, wenn das Schwingsystem des Prüfstands keine Eigendämpfung aufweist.

Um die Schwingungsamplituden der Aufstandsplatte 7 zu reduzieren und ein großes Absenken der Aufstandsplatte 7 bei Belastung mit einem schweren Fahrzeug zu verhindern, ist die Radaufstandsplatte 7 mit einem zweiten elastischen Element 6 verbunden, das sich gegen einen Rahmen 8 der Prüfvorrichtung abstützt. Das zweite elastische Element 6 stützt die Radaufstandsplatte 7, führt einen Teil der Gewichtskraft des Fahrzeugs auf den Rahmen 8 ab und wird deshalb auch als Bypaßfeder bezeichnet. Die elastischen Elemente 3, 6 können als Schraub-, Blatt- oder Luftbalgfedern ausgebildet sein. Es ist auch möglich elastische Elemente mit veränderbarer Federsteifigkeit vorzusehen.

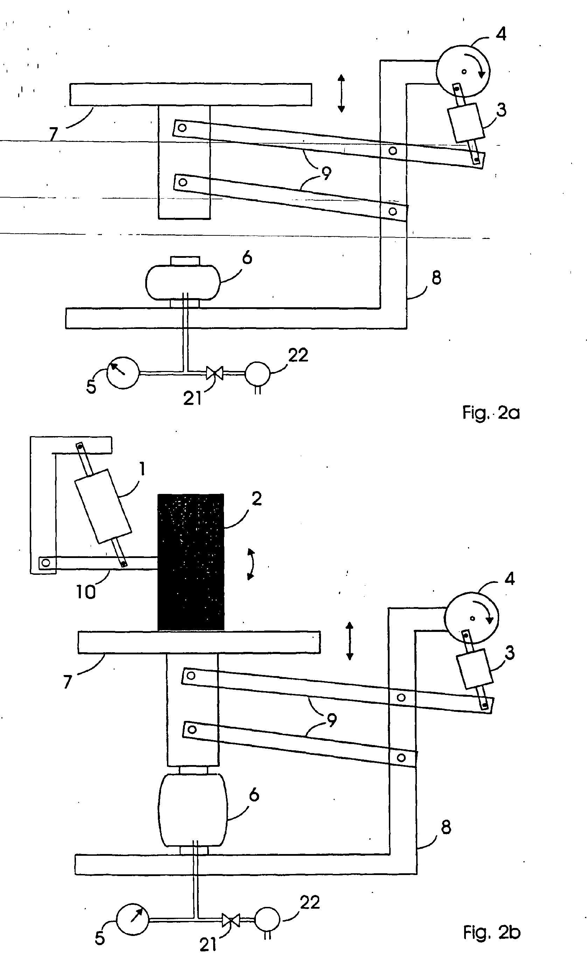

Die Fig. 2a zeigt eine schematische Darstellung einer unbelasteten Prüfvorrichtung. Die Aufstandsplatte 7 wird von einer Parallelschwinge 9 gehalten und von dieser geführt. Die Parallelschwinge 9 ist über das erste elastische Element 3 mit dem Antrieb 4 der Prüfvorrichtung verbunden. Der Antrieb 4 weist einen Kurbeltrieb zur Erzielung eines Erregerhubs auf. Die Drehbewegung des Antriebs 4 wird über den Kurbeltrieb und die Parallelschwinge 9 in eine vertikale Bewegung der Aufstandsplatte 7 überführt.

Das zweite elastische Element 6 ist in dem gezeigten Ausführungsbeispiel als koppelbare Luftbalgfeder ausgebildet. Die Luftbalgfeder 6 kann bei Bedarf von einer Pumpe 22 über ein Ventil 21 aufgepumpt werden, um die Aufstandsplatte bei der Prüfung von schweren Fahrzeugen gegen den Rahmen 8 abzustützen. Über die Pumpe 22 kann der Luftdruck des Luftbalgs verändert und die Federsteifigkeit der Luftbalgfeder 6 an das Fahrzeuggewicht angepaßt werden. Es ist auch möglich zwischen Aufstandsplatte 7 und Luftbalgfeder 6 einen mechanischen oder magnetischen Verschluß vorzusehen, um eine lösbare Verbindung zwischen diesen zu schaffen.

Weiterhin kann die Luftbalgfeder 6 durch eine Erhöhung des Luftdrucks in dem Luftbalg an die Radaufstandsplatte 7 angekoppelt werden. Eine Abkopplung kann durch das Ablassen oder Absaugen von Luft aus dem Luftbalg erfolgen. Dabei ist es möglich, daß weitere Federelemente vorgesehen sind, die das Ablassen der Luft beschleunigen, indem sie den Luftbalg zusammenziehen.

Die Meßvorrichtung 5 erfaßt über den Luftdruck im Inneren des Luftbalgs die auf die Luftbalgfeder 6 wirkende Kraft. Unter Berücksichtigung der erfaßten Kraft können die Position und die Bewegung der Aufstandsplatte 7 ermittelt werden.

Die Fig. 2b zeigt schematisch eine mit einem Fahrzeug belastete Prüfvorrichtung, bei der das zweite elastische Element 6 an die Aufstandsplatte 7 angekoppelt ist. Das zweite elastische Element 6 ist als Luftbalgfeder ausgebildet und kann bei schweren Fahrzeugen ein übermäßiges Absinken der Radaufstandsplatte 7 durch das Fahrzeuggewicht verhindern. Hierzu kann eine Anpassung der Federsteifigkeit der Luftbalgfeder 6 durch eine Veränderung des Luftdrucks in dem Luftbalg erfolgen. Nachdem der entsprechende Luftdruck durch die Pumpe 22 erzeugt wurde, kann die Pumpe 22 über ein Ventil 21 abgesperrt werden und die Messung der Kraft auf die Luftbalgfeder 6 über den Luftdruck im Luftbalg durch die Meßvorrichtung 5 durchgeführt werden.

Die Aufstandsplatte 7 wird von einer Parallelschwinge 9 gehalten und über diese und das erste elastische Element 3 mit dem Antrieb 4 verbunden. Der Hub des Kurbeltriebes bewirkt eine vertikale Schwingbewegung der Aufstandsplatte 7, welche die Fahrzeugachse 10 mit Fahrzeugrad 2 und Schwingungsdämpfer 1 zu Schwingungen anregt. Zur Prüfung des Schwingungsdämpfers 1 erfolgt eine Anregung mit verschiedenen Frequenzen, insbesondere im Frequenzbereich von 0 bis 15 Hz. In diesem Frequenzbereich liegt gewöhnlich die Resonanzfrequenz der Fahrzeugradaufhängung. Bei einer Anregung mit der Resonanzfrequenz erfolgt eine Resonanzschwingung der Fahrzeugachse 10 mit Fahrzeugrad 2 und Schwingungsdämpfer 1. Die Amplitude dieser Resonanzschwingung kann über die Bewegung der Aufstandsplatte 7 erfaßt werden. Die Amplitude und/oder der Verlauf der Resonanzschwingungen erlauben eine Beurteilung des zu prüfenden Stoßdämpfers 1 im eingebauten Zustand.

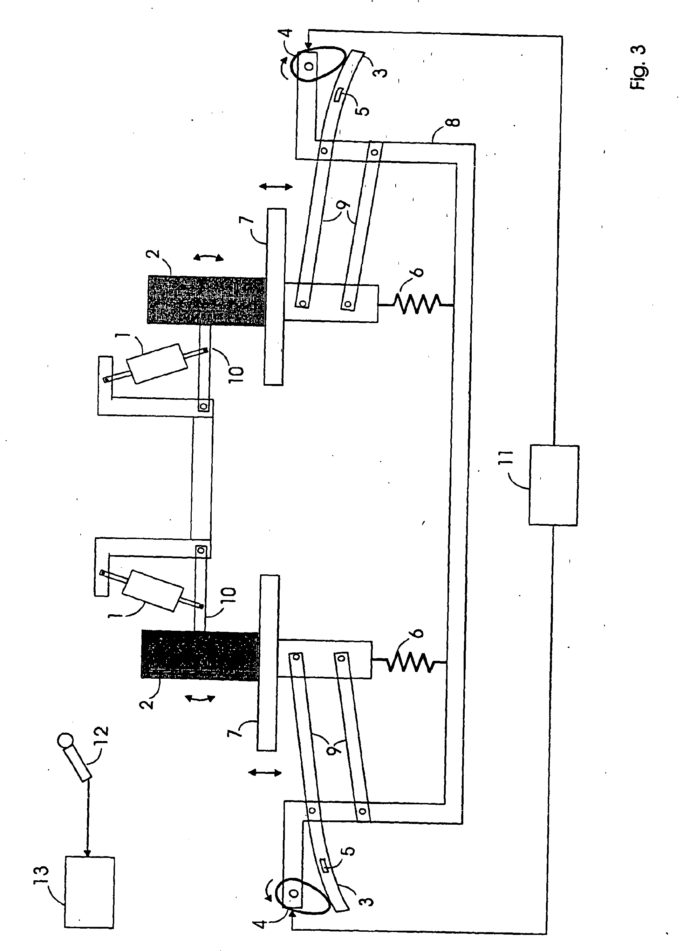

Die Fig. 3 zeigt eine schematische Darstellung einer Prüfvorrichtung für die beiden Räder einer Achse, z.B. der Vorderachse, des zu prüfenden Fahrzeugs. Die gezeigte Prüfvorrichtung kann sowohl zur Prüfung der Schwingungsdämpfer 1 für Kraftfahrzeuge verwendet werden.

Die beiden Aufstandsplatten 7 sind jeweils über ein elastisches Element 3, das in dem gezeigten Ausführungsbeispiel als Blattfeder ausgebildet ist, mit jeweils einem Antrieb 4 verbunden. Die beiden Antriebe 4 weisen jeweils einen Elektromotor und einen Exzenter mit einem Nocken auf, der auf die Blattfeder 3 einwirkt. Über eine Antriebssteuerung 11 können die beiden Antriebe 4 phasensynchron angesteuert werden, um ein gleichzeitiges Prüfen der beiden Schwingungsdämpfer 1 zu ermöglichen.

Die Positionen und Bewegungen der Aufstandsplatten 7 werden von einer Meßvorrichtung 5 erfaßt, die als Dehnungsmeßstreifen ausgebildet ist. Die Dehnungsmeßstreifen sind an den Blattfedern 3 angeordnet und ermöglichen eine einfache Erfassung der Durchbiegung der Blattfedern 3. Unter Berücksichtigung der Winkellage des Exzenters kann über den Biegezustand der Blattfedern 3 die Position der Aufstandsplatte 7 ermittelt werden.

Zur Unterstützung der Aufstandsplatten 7 sind Bypaßfedern 6 zwischen den Aufstandsplatten 7 und dem Rahmen 8 vorgesehen. Eine weitere erfindungsgemäße Möglichkeit die Position bzw. den Bewegungszustand der Aufstandsplatten 7 zu ermitteln sieht vor, die Kraft auf die Bypaßfedern 6 über eine Kraftmeßdose zu bestimmen.

## Patentansprüche

1. Prüfvorrichtung für Schwingungsdämpfer (1) von Fahrzeugen in eingebautem Zustand mit mehreren Aufstandsplatten (7), die jeweils einem Fahrzeugrad (2) zugeordnet und mit jeweils einem Antrieb (4) verbunden sind, wobei eine Bewegung der Aufstandsplatten (7) von einer Messvorrichtung (5) erfasst wird,
**dadurch gekennzeichnet, dass**
eine Antriebssteuerung (11) so ausgebildet ist, dass sie die Antriebe (4) derart einzeln ansteuert, dass die Aufstandsplatten (7) phasensynchron schwingen, und die Aufstandsplatten (7) über ein erstes elastisches Element (3) mit jeweils einem Antrieb (4) verbunden sind, wobei das erste elastische Element (3) eine Entkopplung der Bewegung der Aufstandsplatte (7) und des zugehörigen Antriebs (4) ermöglicht.

2. Vorrichtung nach Anspruch 1, **dadurch gekennzeichnet, dass** die Antriebe (4) als Drehstrommotoren, insbesondere als Asynchron-Drehstrommotoren, ausgebildet sind.

3. Vorrichtung nach zumindest einem der Ansprüche 1 oder 2, **dadurch gekennzeichnet, dass** ein zweites elastisches Element (6) zwischen der Aufstandsplatte (7) und einem Rahmen (8) vorgesehen ist.

4. Vorrichtung nach Anspruch 3, **dadurch gekennzeichnet, dass** die Messvorrichtung (5) als Kraftmessvorrichtung ausgebildet ist, die eine Kraft auf das zweite elastische Element (6) erfasst.

5. Vorrichtung nach zumindest einem der Ansprüche 1 bis 4, **dadurch gekennzeichnet, dass** die Radaufstandsplatten (7) von den Antrieben (4) in Schwingbewegungen versetzt werden und die zugeordneten Fahrzeugachsen (10) mit Fahrzeugrad (2) und Schwingungsdämpfer (1) zu Resonanzschwingungen anregen.

6. Verfahren zur Prüfung von Schwingungsdämpfern (1) von Fahrzeugen in eingebautem Zustand mit den Schritten:
- Antreiben von mehreren jeweils einem Fahrzeugrad (2) zugeordneten Aufstandsplatten (7) über jeweils ein erstes elastisches Element (3) von jeweils einem Antrieb (4)
- Erfassung einer Bewegung der Aufstandsplatte (7),
**dadurch gekennzeichnet, dass**
eine Antriebssteuerung (11) die Antriebe (4) derart ansteuert, dass die Aufstandsplatten (7) phasensynchron schwingen, und die Aufstandsplatten (7) über ein erstes elastisches Element (3) mit jeweils einem Antrieb (4) verbunden sind, wobei das erste elastische Element (3) eine Entkopplung der Bewegung der Aufstandsplatte (7) und des zugehörigen Antriebs (4) ermöglicht.

7. Verfahren nach Anspruch 6, **dadurch gekennzeichnet, dass** die Radaufstandsplatte (7) von dem Antrieb (4) in Schwingbewegungen versetzt wird und eine Fahrzeugachse (10) mit Fahrzeugrad (2) und Schwingungsdämpfer (1) zu Resonanzschwingungen anregt.

## Claims

1. A device for testing vehicle shock absorbers (1) in a built-in condition comprising multiple support plates (7), each assigned to a respective vehicle wheel (2) and each coupled to an actuator (4), wherein a motion of said support plates (7) is detected by a measuring device (5),
**charcterized in that**
an actuation control system (11) is configured to individually control said actuators (4) such that said support plates (7) oscillate synchronously in phase, and said support plates (7) are each coupled to a respective actuator (4) via a first elastic element (3), said first elastic element (3) facilitating a decoupling of the motion of said support plate (7) and said associated actuation (4).

2. The device according to claim 1, **characterized in that** said actuators (4) are configured to be three-phase motors, particularly three-phase asynchronous motors.

3. The device according to at least one of claims 1 or 2, **characterized in that** a second elastic element (6) is provided between said support plate (7) and a frame (8).

4. The device according to claim 3, **characterized in that** said measuring device (5) is configured to be a load measuring device which detects a load applied to said second elastic element (6).

5. The device according to at least one of claims 1 to 4, **characterized in that** said wheel support plates (7) are caused to oscillate by said actuators (4) and excite said assigned vehicle axles (10) together with said vehicle wheel (2) and said shock absorber (1) to be set in resonance oscillations.

6. A method for testing vehicle shock absorbers (1) in a built-in condition comprising the steps of:
- driving multiple support plates (7) each assigned to a respective vehicle wheel (2) via a respective first elastic element (3) by a respective actuator (4),
- detecting a motion of said support plate (7),
**characterized in that**
an actuation control system (11) controls the actuators (4) such that said support plates (7) oscillate synchronously in phase, and said support plates (7) are each coupled to a respective actuator (4) via a first elastic element (3), said first elastic element (3) facilitating a decoupling of the motion of said support plate (7) and said associated actuator (4).

7. The method according to claim 6, **characterized in that** said wheel support plate (7) is caused to oscillate by said actuator (4) and excites resonance oscillations of a vehicle axle (10) together with said vehicle wheel (2) and said shock absorber (1).

## Revendications

1. Banc d'essai pour amortisseurs (1) de véhicules à l'état monté avec plusieurs plaques d'appui (7), qui sont associées respectivement à une roue de véhicule (2) et respectivement à un entraînement (4), où un mouvement des plaques de contact (7) d'un banc d'essai (5) est détecté,
**caractérisé en ce que**
un contrôle de l'entraînement (11) est conçu de telle sorte qu'il contrôle individuellement les entraînements (4) de manière à ce que les plaques de contact (7) oscillent en synchronie de phases et que les plaques de contact (7) soient reliées par le biais d'un premier élément élastique (3) avec respectivement un entraînement (4), où le premier élément élastique (3) permet un découplage du mouvement de la plaque de contact (7) et de l'entraînement associé (4).

2. Banc selon la revendication 1, **caractérisé en ce que** les entraînements (4) sont conçus sous la forme de moteurs à courant alternatif triphasé, notamment de moteurs à courant alternatif triphasé asynchrone.

3. Banc selon au moins l'une des revendications 1 ou 2, **caractérisé en ce qu'**un deuxième élément élastique (6) est prévu entre la plaque de contact (7) et un cadre (8).

4. Banc selon la revendication 3, **caractérisé en ce que** le dispositif de mesure (5) est conçu sous la forme d'un dispositif de mesure de force, qui détecte une force exercée sur le deuxième élément élastique (6).

5. Banc selon au moins l'une des revendications 1 à 4, **caractérisé en ce que** les plaques de contact des roues (7) sont mises en mouvements d'oscillation par les entraînements (4) et font osciller par résonance les essieux du véhicule associés (10) avec roue (2) et amortisseur (1).

6. Procédé de contrôle des amortisseurs (1) de véhicules à l'état monté, comprenant les étapes consistant à :
- entraîner plusieurs plaques de contact (7) associées respectivement à une roue de véhicule (2) par le biais respectivement d'un premier élément élastique (3) de respectivement un entraînement (4)
- détecter un mouvement de la plaque de contact (7),
**caractérisé en ce qu'**un contrôle de l'entraînement (11) contrôle les entraînements (4) de manière à ce que les plaques de contact (7) oscillent en synchronie de phases et que les plaques de contact (7) soient liées par le biais d'un premier élément élastique (3) avec respectivement un entraînement (4), où le premier élément élastique (3) permet un découplage du mouvement de la plaque de contact (7) et de l'entraînement associé (4).

7. Procédé selon la revendication 6, **caractérisé en ce que** la plaque de contact de la roue (7) est mise en mouvements d'oscillation par l'entraînement (4) et fait osciller par résonance un essieu de véhicule (10) avec roue (2) et amortisseur (1).
